# EUROPEAN PATENT SPECIFICATION

(11) **EP 4 201 908 B1**
(45) Date of publication and mention of the grant of the patent: **04.12.2024**
(21) Application number: 21217500.4
(22) Date of filing: 23.12.2021
(51) Int. Cl.: C04B 7/47

(54) **DEVICE AND METHOD FOR MANUFACTURING CEMENT CLINKER AND CALCINED CLAY**
VORRICHTUNG UND VERFAHREN ZUR HERSTELLUNG VON ZEMENTKLINKER UND KALZINIERTEM TON
DISPOSITIF ET PROCÉDÉ DE FABRICATION DE CLINKER DE CIMENT ET D'ARGILE CALCINÉE

(43) Date of publication of application: 28.06.2023
(73) Proprietor: Heidelberg Materials AG, 69120 Heidelberg (DE)
(72) Inventor: REINDL, Bernhard, 69120 Heidelberg (DE); KLEINSORGE, Bernhard, 69120 Heidelberg (DE); CLEMENZI, Mauro, 69120 Heidelberg (DE)
(74) Representative: Zellentin & Partner mbB Patentanwälte

(56) References cited:
- WO-A1-2021/124261
- DE-B3- 102016 005 285
- HANEIN THEODORE ET AL: "Clay calcination technology: state-of-the-art review by the RILEM TC 282-CCL", MATERIALS AND STRUCTURES, SPRINGER NETHERLANDS, DORDRECHT, vol. 55, no. 1, 20 December 2021 (2021-12-20), XP037647494, ISSN: 1359-5997, [retrieved on 20211220], DOI: 10.1617/S11527-021-01807-6
- ANONYMOUS: "Puzzolane aus Calcinierung kalkhaltiger und dotierter Tone - Untersuchungen zu de-ren Hydratationsverhalten im Zement", VDZ GGMBHFORSCHUNGSINSTITUT DER ZEMENTINDUSTRIE,19744 N, 1 January 2018 (2018-01-01), pages 1 - 5, XP093116633

## Description

The present invention relates to a device and method for the simultaneous manufacturing of calcined clay and cement clinker in separate production lines with heat transfer between the production lines.

Cement is a versatile material which is widely used in building. However, manufacturing ordinary portland cement, the most common cement, is an energy intensive process believed to be responsible for a considerable amount of man-made carbon dioxide emissions. Great effort has been made to reduce the carbon footprint and also to minimize the use of natural resources. Successful proposals are especially using waste as fuel, optimization of the manufacturing conditions, use of waste as replacement raw materials, substituting clinker with pozzolanic and/or latent hydraulic materials - in particular such derived from waste -, optimization of binder composition and also recycling demolished concrete. Further, alternative cements are diligently examined. All these approaches provide progress, but many find limits due to a decreasing availability of suitable waste and the required fulfilment of safety and standardization needs.

One interesting supplementary cementitious material (abbreviated SCM herein) for substituting cement clinker is calcined clay. Interest in calcined clay has greatly increased over the last years due to a heavily rising demand for SCM and a decreasing availability of slag and fly ash, the most common SCMs. However, clay calcination in itself is an energy intensive process. Usual devices for calcining clay are rotary kilns and flash calciners. Information can be found e.g. in "A focus on flash calcining", Int. Cement Review Jan. 2021 and "Clay calcining technologies: the rotary kiln approach", Int. Cement Review Aug. 2021. An early proposal to use flash calcination is found in US 6,168,424 B1. Furthermore, DE 10 2016 005 285 B3 describes an improved method for calcining clay using a cyclone preheater and a co-current reactor for calcination. The air for calcination in the co-current reactor can either be ambient air or recuperation air from the cement plant. One recent proposal to improve energy utilization is described in WO 2021/124261 A1. Therein, clay and cement manufacturing are combined to make heat arising in one step useful for the other. It is pointed out that calcining the clay in a rotary kiln using heat from the clinker cooler allows to reduce investment and operation costs compared to using a flash calciner. This is mainly attributable to the usually lower investment costs, especially when a closed down kiln can be used, and larger flexibility for particle size and moisture content of the clay raw material. On the other hand, as described by the documents mentioned before, flash calcination allows tighter control of calcination conditions which can be essential for providing calcined clay with appropriate pozzolanic activity. Consequently, it is not clear which device and process is best for calcining clay.

Also, there is always the object to save more energy and natural resources.

Surprisingly, it was now found that a device and method for the combined manufacturing of cement clinker and calcined clay using hot air from cement clinker cooling for clay calcination in a flash calciner and recirculation of the flash calciner exhaust gas into the cement clinker raw meal preheating and/or calcination is able to substantially reduce the overall energy demand while allowing to set optimal clay calcination conditions.

The above object is thus achieved by a method for the combined manufacturing of cement clinker and calcined clay,
wherein the cement clinker is produced by the steps:
providing a cement raw meal, preheating the cement raw meal to provide preheated cement raw meal,
precalcination of the preheated cement raw meal to provide precalcined cement raw meal,
sintering the precalcined cement raw meal in a rotary kiln to provide the cement clinker, and
cooling the cement clinker with a counter current gas stream providing hot air, and wherein the calcined clay is produced by the steps:
   providing a clay raw material, if necessary ground and/or dried,
   preheating the clay raw material to provide a preheated clay raw material, and calcining the preheated clay raw material suspended in hot gas in a flash calciner to provide the calcined clay,
   wherein the hot air from cooling the cement clinker is divided into at least two streams, a first combustion air stream used in sintering the precalcined cement raw meal and a second combustion air stream used in calcining the preheated clay raw material, and wherein exhaust gas from calcining the preheated clay raw material is fed into the calcination of the preheated cement raw meal. The object is further achieved by a device for the combined manufacturing of cement clinker and calcined clay, comprising a cement clinker manufacturing line and a clay calcination line, wherein the cement clinker manufacturing line comprises a cement raw meal preheater and calciner section equipped with two or more cyclones for preheating cement raw meal and a calciner comprising a calciner burner or a burning chamber supplying heated gas to the calciner section for precalcining the preheated cement raw meal, a rotary kiln for sintering the precalcined cement raw meal to cement clinker equipped with a kiln burner, and a cement clinker cooler equipped with an air supply and means for dividing hot air having passed the clinker cooler into at least two streams, and wherein the clay calcination line comprises a heat exchange section equipped with at least two cyclones for preheating a clay raw material, a fan for overcoming the additional pressure drop of the heat exchanger and a section for separating the calcined clay from air, and a flash calciner as clay calcination section adapted for calcining the clay raw material suspended in air and equipped with a clay calcination burner, wherein a part of the hot air from the clinker cooler is fed to the clay calcination section as a second combustion air; and an exhaust gas from the clay calcination section is fed back into the cement raw meal calcination where it is used as a first combustion air in the calciner burner or burning chamber.

The components used in the device according to the invention are known as such. Also, one of ordinary skill in the art is acquainted with suitable conditions to carry out the steps of the method according to the invention. The novel combination of the two processes and production lines has several advantages.

The device and method according to the invention significantly reduce the overall energy demand for manufacturing cement clinker and calcined clay by using hot off gas from cement clinker cooling as combustion air in clay calcination. Clay calcination benefits from the possibility to precisely adjust the calcination temperature by using a flash calcination. The heat exchange between clay raw material and exhaust gas from the clay calcination section allows using a simple suction fan to feed the gas to the cement clinker raw meal calcination. Only very minor changes are needed to adapt an existing cement clinker manufacturing line by integration of the clay calcination and thereby transform the plant into a device according to the invention.

Another big advantage is that the invention avoids very expensive emission control systems for SOₓ and other emissions generated in the clay calcination process.

SOₓ, i.e. SO₂ and/or SOs, generated both from sulphite present in the clay and sulphur present in the fuels is not scrubbed in the clay calcination process as no basic material like free lime is present. In case of a stand alone clay calcination unit this would potentially lead to very high SOₓ emissions requiring an expensive scrubbing system for emission control. By rerouting gas from calcination units back to cement clinker kiln calciner, the flue gas will be "cleaned" by the free lime and limestone present in the clinker calcination process, thus reducing potential SOₓ emission to a very minimum value.

Further, organic emissions can be generated in the calcination unit from the organic material possibly present in the raw clay. By routing gas from the clay calcination line back to the clinker calcination line, organic emission will be partially or totally destroyed in the high temperature long residence time of the clinker calciner.

For other emissions like heavy metals and NOₓ the existing emission control systems are used. For example, injecting activated carbon after clinker calcination for reducing mercury and/or reducing NOx in the SNCR-system (or SCR-System) of the clinker calcination process. So, the method and device according to the invention have the big advantage, that no additional emission control systems for SOₓ, NOₓ, organic emissions, or heavy metals like Hg have to be installed.

The method and device according to the invention will be explained in more detail in the following including preferred embodiments thereof. Further advantages will also become apparent therefrom.

The cement manufacturing steps and lines correspond to the usual steps and devices used in manufacturing of any kind of portland cement clinker, calcium-sulfo-aluminate clinker and calcium-sulfo-aluminate-belite clinker. In fact, it is one advantage of the present invention that an existing cement manufacturing line can easily be retrofitted with the clay calcination line to convert it into a device according to the invention.

As usual, cement raw meal is provided in a first step for the cement manufacturing. Typically, cement raw materials are ground and mixed as well as dried when necessary to obtain the cement raw meal. Mix design and particle sizes are adjusted as usual. Exhaust gas from the cement clinker production process (kiln) is usually used for drying cement raw materials within the grinding process.

The cement raw meal is then preheated in counter current flow with exhaust gas from the cement clinker kiln. A useful preheating section comprises at least two, often three or four, cyclones. According to the invention the preheating is coupled with a calcination to decarbonate a substantial amount of the calcium carbonate in the preheated cement clinker raw meal. Typically, decarbonation is not complete, a minor amount of the carbonate is only decarbonated in the kiln. The calciner receives preheated raw meal and gas which is heated by a calciner burner and/or in a separate burning chamber connected to the calciner. The burning process in the calciner can take place with conventional fossil fuels like gas, petroleum, and coal, but preferably it works with alternative fuels to reduce the carbon footprint of the whole process. Suitable alternative fuels are for example but not limited to combustible municipal, industrial and commercial waste, refuse-derived fuels, and biomass. At least a part of the combustion air for the calciner burner or burning chamber is provided by the exhaust gas from the clay calcination. Within the burning chamber or through the calciner burner the exhaust gas is heated to a temperature needed for the cement clinker raw meal calcination. Additionally, all heat needed for the cement clinker raw meal calcination is added to the calciner burner or burning chamber using fuels as mentioned before. The gas heated in the calciner burner or burning chamber is generated in or fed into the cement calciner to start the calcination process. An advantage of using a burning chamber is that ashes coming from the burning process can be directed to the clinker sintering process in the kiln. Thus, a burning chamber is especially suitable for solid fuels generating a substantial amount of ashes. The preheated and subsequently precalcined cement clinker raw meal typically comprises from a few percent, e.g. from 1 to 5 wt.-%, up to 30 or 40 wt.-% carbonate.

The precalcined cement raw meal is fed to the rotary kiln as usual. Inside the rotary kiln it is sintered to provide cement clinker. The kiln burner can also work either with fossil fuels or with alternative fuels. Again at least partly using alternative fuels is preferred. The combustion air for the kiln burner comes from the cement clinker cooler as known per se.

The obtained cement clinker passes from the kiln to the cooler where it is cooled down with a counter current air stream. All known cooler types are useful, preferred are grate coolers. According to the invention, a part of the air heated up during cement clinker cooling is used as a first combustion air for sintering cement clinker raw meal in the rotary kiln as usual. Another part (tertiary air) may be guided directly into the cement clinker raw meal calciner or used otherwise, e.g. for drying cement clinker raw materials, also as usual. In contrast to the usual procedure, a part of the hot air from the cement clinker cooler is divided out and used as a combustion air in the clay calcination.

The cooled cement clinker is processed as usual, e.g. ground to cement with or without further constituents like sulfate. In one preferred embodiment the cement, i.e. the ground cement clinker, is mixed with the calcined clay to provide a composite cement.

For the clay calcination line, clay raw material is provided first. Clay raw material can have very variable compositions. Preferred clay raw materials contain substantial amounts of clay minerals like kaolinite, illite and montmorillonite, most preferred kaolinite. Typically, at least 15 wt.-%, preferably at least 20 wt.-%, most preferred at least 30 wt.-% clay minerals should be contained.

The clay raw material can be pre-processed if necessary. For example, but not limited to, it can be dried to less than 1 wt.-% residual moisture and/or ground to a fineness around 10 to 15 wt.-% residue on a 90 µm sieve. For example hot kiln off gas in combination with any grinding equipment feasible is useful for this.

In a preferred embodiment, non-clay phases like quartz and feldspar are separated off, e.g. as described EP4001236 A1. Thereby, wear on the clay calcination section is reduced and unnecessary energy consumption for heating material not participating in the calcination is avoided.

The clay raw material is preheated in a heat exchange section of the clay calcination line. A cyclone preheater with at least two, typically three or four cyclones, is used for this. The clay raw material is fed to the gaseous stream fed into the uppermost cyclone. The gaseous stream comprising calcined clay and exhaust gas from the clay calcination is fed to the lowermost cyclone. From that, calcined clay is obtained as solid material stream and guided into a cooling section, e.g. a heat exchanger, preferably a cyclone heat exchanger. The heat exchange section cools the exhaust gas from the clay calcination section transferring heat to the clay raw material for preheating it. Typically, the heat exchange cools the exhaust gas to a temperature, normally < 450 °C, allowing the use of a fan, preferably a booster fan, to feed the cooled exhaust gas to the cement raw meal calcination. Using a booster fan greatly eases retrofitting of existing cement manufacturing lines with the clay calcination line. In one embodiment the clay calcination line comprises a gas conditioning tower to provide additional cooling of the exhaust gas after it has been heat exchanged with the clay raw material. Preferably, the gas is cooled with injected water inside the gas conditioning tower. Thereby, it is still possible to use a cost effective fan to counteract the pressure drop of the second combustion air in the clay calcination line when high amounts of hot air are fed to the clay calcination line to save fuel for flash calcination.

Calcination of the clay raw material takes place with the clay raw material particles suspended in the gas heated by the clay calcination burner, thus, in the flash calciner. The calcination temperature (adjusted via the burner) and the residence time (adjusted by volume flow rate of the gas in the device) are adjusted to ensure essentially complete dehydroxylation of the clay phases while avoiding crystallization. In the case of clay phase mixtures where that is not possible a suitable compromise is defined to obtain the highest possible pozzolanic activity of the calcined clay. Typically, temperatures in the range from 600 to 980 °C and residence times from a few seconds, e.g. 1, 2 or 3 seconds, up to 5 or 10 seconds, are useful. The optimum temperature for a given clay raw material can be determined by thermogravimetry and differential scanning calorimetry. Often 750 to 850 °C is optimum but lower limits of 650 or 700 °C or upper limits of 900 or 950 °C or even above 980 °C are possible. The clay calcination burner can work with fossil fuels and alternative fuels. Preferably, it works with alternative fuels. Since the combustion air is provided by the hot air from the cement clinker cooler, energy demand is substantially reduced as compared to a use of ambient air or of a gas derived from "only" cooling the calcined clay as the second combustion air stream.

The calcined clay, which is separated from the exhaust gas in the heat exchanger section and cooled in a section for cooling calcined clay, is usually ready for mixing with cement. Calcination in gas suspension safely avoids agglomeration of the particles. Mixing of the calcined clay with the cement provides the composite cement. It can be accomplished in any known device, e.g. but not limited to in a mixing silo, drum, cooler, blender. The calcined clay can also be stored, e.g. in a silo, before mixing. Further, it is possible to add additional cement components during mixing cement and calcined clay, e.g. other constituents, admixtures, and/or additives. The most common other constituents are described in EN 197-1, for example limestone, fly ashes and ground granulated blast furnace slag. Other SCM can also be used like bottom ash and slags from other sources than pigiron making. Typical admixtures are water reducers, (super) plasticizers, (set) retarders and accelerators or strength enhancer. Composite cements made from calcined clay obtained by the method according to the invention have a significantly reduced carbon footprint.

The invention will be illustrated further with reference to the attached figures, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

In the figures,
Fig. 1 shows a first embodiment of a device according to the invention,
Fig. 2 shows a second embodiment, and
Fig. 3 shows a third embodiment.

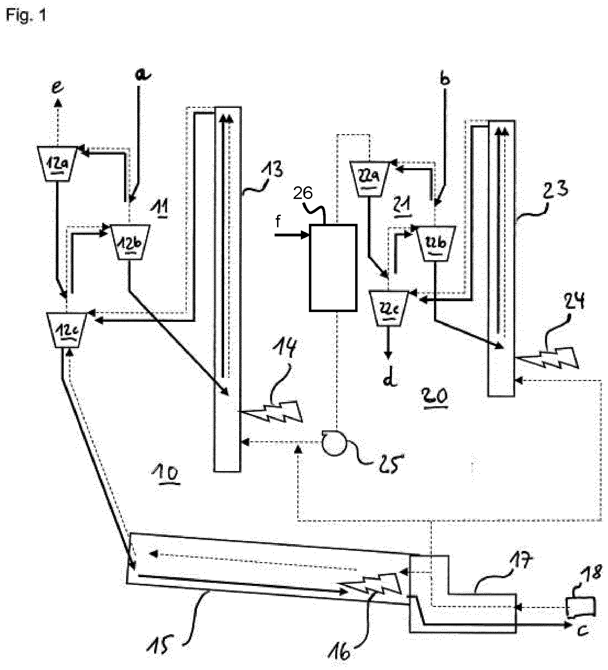

Figure 1 schematically shows a device according to the invention comprising a cement clinker manufacturing line 10 and a clay calcination line 20. The cement clinker manufacturing line 10 comprises a cement raw meal preheater and calciner section 11 equipped with three cyclones 12a, 12b, 12c for preheating cement raw meal a and a calciner 13 comprising a calciner burner 14 for precalcining the preheated cement raw meal. The cement clinker manufacturing line 10 further comprises a rotary kiln 15 equipped with a kiln burner 16 for sintering the precalcined cement raw meal to cement clinker c. The cement clinker manufacturing line 10 also comprises a cement clinker cooler 17 equipped with an air supply 18 and means for dividing hot air having passed the clinker cooler 17 into at least two streams. The clay calcination line 20 comprises a heat exchange section 21 equipped with three cyclones 22a, 22b, 22c for simultaneously preheating the clay raw material b and separating the calcined clay d from the air. The clay calcination line 20 further comprises a clay calcination section 23 adapted for calcining the preheated clay raw material being suspended in gas. The clay calcination section 23 is equipped with a clay calcination burner 24. A fan 25 is provided to transfer exhaust gas from the clay calcination section 23 to the calciner 13. A gas conditioning tower 26 equipped with a supply for water f is foreseen for cooling of the exhaust gas transferred from heat exchange section 21 to the calcination 13. Gas and air streams are indicated with dotted lines and material streams with solid lines in figure 1.

For operation cement clinker raw meal a is fed to the gaseous stream rising from cyclone 12b to cyclone 12a. Clay raw material b is fed to the gaseous stream rising from cyclone 22b to cyclone 22a. Air is fed to the cooler 17 via the gas supply 18. Cooled exhaust gas e is discharged from the cement manufacturing line 10 from cyclone 12a and proceeded as normal. Remaining heat in the exhaust gas e can be used e.g. to dry raw materials but also in other ways. Finally, exhaust gas e from the cement manufacturing line 10 will be vented to the stack of the plant, usually after having been cleaned from NOₓ, SOₓ, heavy metals, and dust as needed. Such cleaning is known per se and can also occur in and in between devices shown in figure 1, e.g. in the gas conditioning tower 26. Cooled cement clinker c leaves the cooler 17 and is also processed further as known. Calcined clay d is cooled after leaving the heat exchange section 21 and having been taken out from the cyclone 22c. The exhaust gas from the clay calcination 23 is utilized to preheat the clay raw material b and the cooled gas is transferred to the cement precalcination 13. The burners 14, 16, and 24 are fed both with conventional and alternative fuels. The fuel feed is not shown in the figures. In the shown set-up some gas from the cement clinker cooler 17 is transferred to the cement raw meal precalcination 13.

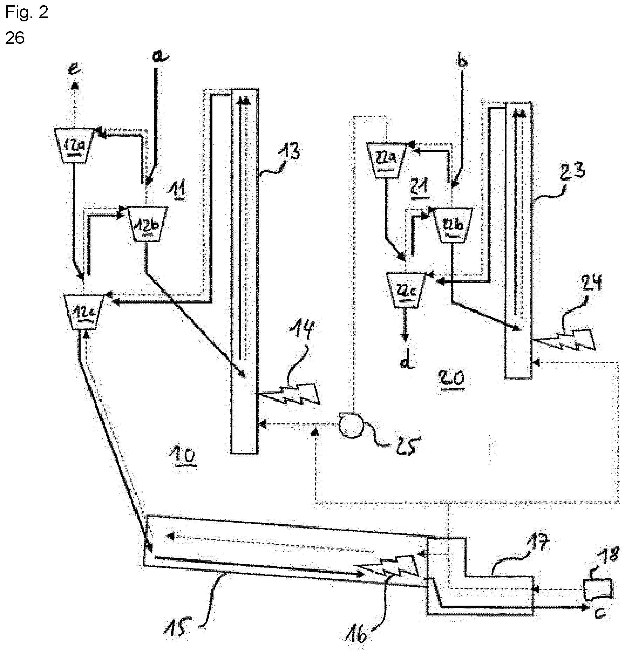

The device schematically shown in figure 2 is very similar to the embodiment shown in figure 1, the same parts are designated with the same reference signs. The difference between figure 1 and figure 2 is that due to smaller amounts of hot air being used as second combustion air in the clay calcination section 23 a gas conditioning tower is not needed. The temperature of the exhaust gas leaving cyclone 22a is low enough to pass it into the fan 25. Of course, this set-up can also be used with higher exhaust gas temperature when the fan 25 is compatible with such higher temperatures.

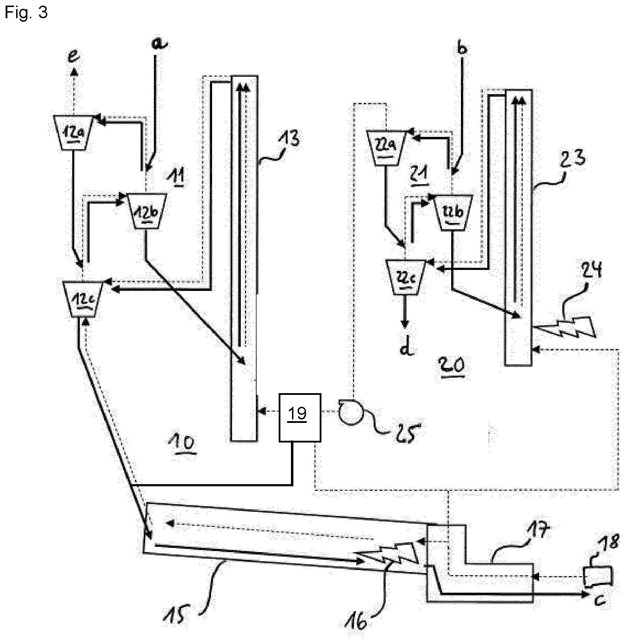

In figure 3 a device with a burning chamber 19 instead of a calciner burner 14 is illustrated. Thus, exhaust gas from the clay calcination line 20 and tertiary air from clinker cooler 17 are fed into the burning chamber 19. Again, the fuel feed is not shown. Ashes resulting from burning fuel in the burning chamber 19 are passed into the rotary kiln 15, preferably by adding them to the precalcined raw meal as shown.

### Reference numbers

- 10: cement manufacturing line
- 11: preheating and calcination section
- 12a: cyclone
- 12b: cyclone
- 12c: cyclone
- 13: calciner, cement precalcination
- 14: calciner burner
- 15: rotary kiln
- 16: kiln burner
- 17: cement clinker cooler
- 18: air supply
- 19: burning chamber
- 20: clay manufacturing line
- 21: heat exchange section
- 22a: cyclone
- 22b: cyclone
- 22c: cyclone
- 23: clay calcination section, flash calciner
- 24: clay calcination burner
- 25: fan
- 26: gas conditioning tower

- a: cement raw meal
- b: clay raw material
- c: cement clinker
- d: calcined clay
- e: exhaust gas
- f: water

## Claims

1. Method for the combined manufacturing of cement clinker and calcined clay, wherein
the cement clinker is produced by the steps:
providing a cement clinker raw meal, preheating the cement clinker raw meal to provide preheated cement clinker raw meal, precalcination of the preheated cement clinker raw meal to provide precalcined cement clinker raw meal, sintering the precalcined cement clinker raw meal in a rotary kiln to provide the cement clinker and cooling the cement clinker with a counter current air stream providing hot air,
and the calcined clay is produced by the steps:
providing a clay raw material, preheating the clay raw material to provide preheated clay raw material, calcining the preheated clay raw material suspended in hot gas in a flash calciner to provide the calcined clay, and cooling the calcined clay;
wherein the hot air from cooling the cement clinker is divided into at least two streams, a first combustion air stream used in sintering the precalcined cement raw meal and a second combustion air stream used in calcining the preheated clay raw material, and wherein exhaust gas from calcining the preheated clay raw material is fed into the calcination of the preheated cement raw meal.

2. Method according to claim 1, wherein the exhaust gas from calcining the preheated clay raw material is conditioned with water.

3. Method according to claim 1 or 2, wherein the preheated cement clinker raw meal is calcined with heat provided by a burning chamber fed with solid fuels.

4. Method according to any one of claims 1 to 3, wherein the precalcined cement clinker raw meal comprises from 1 or 5 wt.-% up to 30 or 40 wt.-% carbonate.

5. Method according to any one of claims 1 to 4, wherein the clay raw material is dried to less than 1 wt.-% moisture and/or ground to a fineness of less than 10 or 15 wt.-% residue on a 90 µm sieve.

6. Method according to any one of claims 1 to 5, wherein the temperature in the clay calcination is adjusted to range from 600, 650, 700, or 750 °C up to 980, 950, 900, or 850 °C.

7. Method according to any one of claims 1 to 6, wherein the residence time in the clay calcination is adjusted to range from 1, 2, or 3 seconds up to 5 or 10 seconds.

8. Device for the combined manufacturing of cement clinker (c) and calcined clay (d), comprising a cement clinker manufacturing line (10) and a clay calcination line (20),
wherein the cement clinker manufacturing line (10) comprises a cement clinker raw meal preheater and calciner section (11) equipped with two or more cyclones (12a, 12b, 12c) for preheating the cement clinker raw meal (a) and a calciner (13) comprising a calciner burner (14) or a burning chamber (19) for precalcining the preheated cement clinker raw meal, a rotary kiln (15) equipped with a kiln burner (16) for sintering the precalcined cement clinker raw meal to cement clinker (c), and a cement clinker cooler (17) equipped with an air supply (18) for cooling the cement clinker (c) and means for dividing hot air having passed the clinker cooler (17) into at least two streams,
wherein the clay calcination line (20) comprises a heat exchange section (21) equipped with at least two cyclones (22a, 22b, 22c) for preheating a clay raw material (b), a section for cooling the calcined clay (d), and a flash calciner as clay calcination section (23) adapted for calcining preheated clay raw material suspended in gas and equipped with a clay calcination burner (24), and
wherein a part of the hot air from the cement clinker cooler (17) is fed to the rotary kiln (15) as a first combustion air and another part is fed to the clay calcination section (23) as a second combustion air; and an exhaust gas from the clay calcination section (23) is fed into the calciner (13).

9. Device according to claim 8, wherein the section for cooling the calcined clay is a heat exchanger, preferably a cyclone heat exchanger.

10. Device according to claim 8 or 9 comprising a gas conditioning tower (26) for conditioning the exhaust gas from calcining the preheated clay raw material.

11. Device according to any one of claims 8 to 10 comprising a fan (25), preferably a booster fan, for transferring the exhaust gas from calcining the preheated clay raw material to the calcination of the preheated cement raw meal.

## Patentansprüche

1. Verfahren zur kombinierten Herstellung von Zementklinker und kalziniertem Ton, wobei
der Zementklinker durch die Schritte hergestellt wird:
Bereitstellen eines Zementklinkerrohmehls, Vorwärmen des Zementklinkerrohmehls, um vorgewärmtes Zementklinkerrohmehl bereitzustellen, Vorkalzinieren des vorgewärmten Zementklinkerrohmehls, um vorkalziniertes Zementklinkerrohmehl bereitzustellen, Sintern des vorkalzinierten Zementklinkerrohmehls in einem Drehrohrofen, um den Zementklinker bereitzustellen, und Kühlen des Zementklinkers mit einem Luftstrom im Gegenstrom wobei Heißluft bereitgestellt wird,
und der kalzinierte Ton durch die Schritte hergestellt wird:
Bereitstellen eines Tonrohmaterials, Vorwärmen des Tonrohmaterials, um vorgewärmtes Tonrohmaterial bereitzustellen, Kalzinieren des vorgewärmten Tonrohmaterials suspendiert in heißem Gas in einem Flashcalcinator, um den kalzinierten Ton bereitzustellen, und Kühlen des kalzinierten Tons;
wobei die heiße Luft vom Kühlen des Zementklinkers in mindestens zwei Ströme aufgeteilt wird, einen ersten Verbrennungsluftstrom, der beim Sintern des vorkalzinierten Zementrohmehls verwendet wird, und einen zweiten Verbrennungsluftstrom, der beim Kalzinieren des vorgewärmten Tonrohmaterials verwendet wird, und wobei Abgas aus dem Kalzinieren des vorgewärmten Tonrohmaterials in die Kalzinierung des vorgewärmten Zementrohmehls geleitet wird.

2. Verfahren gemäß Anspruch 1, wobei das Abgas aus der Kalzinierung des vorgewärmten Tonrohmaterials mit Wasser konditioniert wird.

3. Verfahren gemäß Anspruch 1 oder 2, wobei das vorgewärmte Zementklinkerrohmehl mit Wärme aus einer mit festen Brennstoffen beschickten Brennkammer kalziniert wird.

4. Verfahren gemäß einem der Ansprüche 1 bis 3, wobei das vorkalzinierte Zementklinkerrohmehl von 1 oder 5 Gew.-% bis 30 oder 40 Gew.-% Carbonat enthält.

5. Verfahren gemäß einem der Ansprüche 1 bis 4, wobei das Tonrohmaterial auf weniger als 1 Gew.-% Feuchtigkeit getrocknet und/oder auf eine Feinheit von weniger als 10 oder 15 Gew.-% Rückstand auf einem 90 µm-Sieb gemahlen wird.

6. Verfahren gemäß einem der Ansprüche 1 bis 5, wobei die Temperatur bei der Tonkalzinierung auf einen Bereich von 600, 650, 700 oder 750 °C bis 980, 950, 900 oder 850 °C eingestellt wird.

7. Verfahren gemäß einem der Ansprüche 1 bis 6, wobei die Verweilzeit in der Tonkalzinierung auf einen Wert im Bereich von 1, 2 oder 3 Sekunden bis zu 5 oder 10 Sekunden eingestellt wird.

8. Vorrichtung für die kombinierte Herstellung von Zementklinker (c) und kalziniertem Ton (d) umfassend eine Zementklinkerherstellungslinie (10) und eine Tonkalzinierungslinie (20),
wobei die Zementklinkerherstellungslinie (10) einen Zementklinkerrohmehlvorwärmungs- und -kalzinierungsabschnitt (11) ausgestattet mit zwei oder mehr Zyklonen (12a, 12b, 12c) zum Vorwärmen des Zementklinkerrohmehls (a) und einem Kalzinator (13) umfassend einen Kalzinatorbrenner (14) oder eine Brennkammer (19) zum Vorkalzinieren des vorgewärmten Zementklinkerrohmehls, einen Drehrohrofen (15) ausgestattet mit einem Ofenbrenner (16) zum Sintern des vorkalzinierten Zementklinkerrohmehls zu Zementklinker (c), und einen Zementklinkerkühler (17) ausgestattet mit einer Luftzufuhr (18) zum Kühlen des Zementklinkers (c) und Mitteln zum Aufteilen von Heißluft, die den Klinkerkühler (17) passiert hat, in mindestens zwei Ströme, umfasst,
wobei die Tonkalzinierungslinie (20) einen Wärmeaustauschabschnitt (21) ausgestattet mit mindestens zwei Zyklonen (22a, 22b, 22c) zum Vorwärmen eines Tonrohmaterials (b), einen Abschnitt zum Kühlen des kalzinierten Tons (d) und einen Flashcalcinator als Tonkalzinierungsabschnitt (23), der zum Kalzinieren von vorgewärmtem, in Gas suspendiertem Tonrohmaterial geeignet und mit einem Tonkalzinierungsbrenner (24) ausgestattet ist, umfasst
und wobei ein Teil der Heißluft aus dem Zementklinkerkühler (17) als erste Verbrennungsluft dem Drehrohrofen (15) zugeführt wird und ein anderer Teil als zweite Verbrennungsluft dem Tonkalzinierungsabschnitt (23) zugeführt wird; und ein Abgas aus dem Tonkalzinierungsabschnitt (23) in den Kalzinator (13) geleitet wird.

9. Vorrichtung gemäß Anspruch 8, wobei der Abschnitt zum Kühlen des kalzinierten Tons ein Wärmetauscher, vorzugsweise ein Zyklonwärmetauscher, ist.

10. Vorrichtung gemäß Anspruch 8 oder 9 umfassend einen Gaskonditionierturm (26) zur Konditionierung des Abgases aus der Kalzinierung des vorgewärmten Tonrohmaterials.

11. Vorrichtung gemäß einem der Ansprüche 8 bis 10 umfassend ein Gebläse (25), vorzugsweise ein Zusatzgebläse, zum Überführen des Abgases aus der Kalzinierung des vorgewärmten Tonrohmaterials in die Kalzinierung des vorgewärmten Zementrohmehls.

## Revendications

1. Procédé pour la fabrication combinée de clinker de ciment et d'argile calcinée, dans lequel
le clinker de ciment est produit par les étapes de:
la fourniture d'un cru de clinker de ciment, le préchauffage du cru de clinker de ciment pour fournir un cru de clinker de ciment préchauffé, la précalcination du cru de clinker de ciment préchauffé pour fournir un cru de clinker de ciment précalciné, le frittage du cru de clinker de ciment précalciné dans un four rotatif pour fournir le clinker de ciment et le refroidissement du clinker de ciment avec un flux d'air à contre-courant fournissant de l'air chaud,
et l'argile calcinée est produite par les étapes de:
la fourniture d'une matière première d'argile, le préchauffage de la matière première d'argile pour fournir une matière première d'argile préchauffée, la calcination de la matière première d'argile préchauffée en suspension dans un gaz chaud dans un four de calcination éclair pour fournir l'argile calcinée, et le refroidissement de l'argile calcinée;
dans lequel l'air chaud provenant du refroidissement du clinker de ciment est divisé en au moins deux flux, un premier flux d'air de combustion utilisé lors du frittage du cru de ciment précalciné et un second flux d'air de combustion utilisé lors de la calcination de la matière première d'argile préchauffée, et dans lequel un gaz d'échappement provenant de la calcination de la matière première d'argile préchauffée est introduit dans la calcination du cru de ciment préchauffé.

2. Procédé selon la revendication 1, dans lequel le gaz d'échappement provenant de la calcination de la matière première d'argile préchauffée est conditionné avec de l'eau.

3. Procédé selon la revendication 1 ou 2, dans lequel le cru de clinker de ciment préchauffé est calciné avec la chaleur fournie par une chambre de combustion alimentée avec des combustibles solides.

4. Procédé selon l'une quelconque des revendications 1 à 3, dans lequel le cru de clinker de ciment précalciné comprend de 1 ou 5 % en poids jusqu'à 30 ou 40 % en poids de carbonate.

5. Procédé selon l'une quelconque des revendications 1 à 4, dans lequel la matière première d'argile est séchée jusqu'à moins de 1 % en poids d'humidité et/ou broyée jusqu'à une finesse de moins de 10 ou 15 % en poids de résidu sur un tamis de 90 µm.

6. Procédé selon l'une quelconque des revendications 1 à 5, dans lequel la température lors de la calcination de l'argile est ajustée pour s'étendre de 600, 650, 700 ou 750 °C jusqu'à 980, 950, 900 ou 850 °C.

7. Procédé selon l'une quelconque des revendications 1 à 6, dans lequel le temps de séjour lors de la calcination d'argile est ajustée pour s'étendre de 1, 2, ou 3 secondes jusqu'à 5 ou 10 secondes.

8. Dispositif pour la fabrication combinée de clinker de ciment (c) et d'argile calcinée (d), comprenant une ligne de fabrication de clinker de ciment (10) et une ligne de calcination d'argile (20),
dans lequel la ligne de fabrication de clinker de ciment (10) comprend une section à préchauffeur et un four de calcination de cru de clinker de ciment (11) équipée de deux cyclones ou plus (12a, 12b, 12c) pour le préchauffage du cru de clinker de ciment (a) et un four de calcination (13) comprenant un brûleur de four de calcination (14) ou une chambre de combustion (19) pour la précalcination du cru de clinker de ciment préchauffé, un four rotatif (15) équipé d'un brûleur de four (16) pour le frittage du cru de clinker de ciment précalciné en clinker de ciment (c), et un refroidisseur de clinker de ciment (17) équipé d'une admission d'air (18) pour le refroidissement du clinker de ciment (c) et des moyens pour diviser l'air chaud ayant traversé le refroidisseur de clinker (17) en au moins deux flux,
dans lequel la ligne de calcination d'argile (20) comprend une section d'échange de chaleur (21) équipée d'au moins deux cyclones (22a, 22b, 22c) pour le préchauffage d'une matière première d'argile (b), une section pour le refroidissement de l'argile calcinée (d), et un four de calcination éclair, en tant que section de calcination d'argile (23), conçu pour la calcination d'une matière première d'argile préchauffée en suspension dans un gaz et équipé d'un brûleur de calcination d'argile (24),
et dans lequel une partie de l'air chaud provenant du refroidisseur de clinker de ciment (17) est introduite dans le four rotatif (15) en tant que premier air de combustion et une autre partie est introduite dans la section de calcination d'argile (23) en tant que second air de combustion ; et un gaz d'échappement provenant de la section de calcination d'argile (23) est introduit dans le four de calcination (13).

9. Dispositif selon la revendication 8, dans lequel la section pour le refroidissement de l'argile calcinée est un échangeur de chaleur, de préférence un échangeur de chaleur à cyclone.

10. Dispositif selon la revendication 8 ou 9 comprenant une tour de conditionnement de gaz (26) pour le conditionnement du gaz d'échappement provenant de la calcination de la matière première d'argile préchauffée.

11. Dispositif selon l'une quelconque des revendications 8 à 10 comprenant un ventilateur (25), de préférence un ventilateur d'appoint, pour le transfert du gaz d'échappement provenant de la calcination de la matière première d'argile préchauffée vers la calcination du cru de ciment préchauffé.
